# EUROPEAN PATENT SPECIFICATION

(11) **EP 1 992 546 B1**
(45) Date of publication and mention of the grant of the patent: **17.11.2010**
(21) Application number: 08154810.9
(22) Date of filing: 18.04.2008
(51) Int. Cl.: B62D 3/12, F16H 55/28

(54) **Rack and Pinion Steering Gear Assembly having selfadjusting eccentric Rack Bearing**
Stangengelenkvorrichtung mit selbstverstellbarem Exzenter-Stangenlager
Ensemble d'engrenage de direction à crémaillère doté d'un roulement de crémaillère excentrique à autorégulation

(30) Priority: 14.05.2007 US 930062 P
(43) Date of publication of application: 19.11.2008
(73) Proprietor: Delphi Technologies, Inc., Troy, Michigan 48007 (US)
(72) Inventor: Arlt, George E., Midland, MI 48640 (US)
(74) Representative: Manitz, Finsterwald & Partner GbR

(56) References cited:
- EP-A- 1 738 989
- GB-A- 655 130
- GB-A- 1 074 357
- US-B1- 6 435 050

## Description

### TECHNICAL FIELD

The subject invention generally relates to a power steering apparatus according to the preamble of claim 1.

### BACKGROUND OF THE INVENTION

Power steering systems having a rack and a pinion are utilized in nearly all of today's vehicles to steer at least two of the wheels of a vehicle. The steering wheel of the vehicle is typically connected to a pinion gear that is in meshing engagement with a rack. The rack and pinion is supported in a housing and the rack translates the rotational movement of the pinion and steering wheel into a linear movement. The linear movement of the rack is translated to the steerable wheels of the car typically by a tie rod connected to each of the steerable wheels. In addition, power steering systems typically include an assisting force that provides a pressure or a force in proportion to the rotation of the steering wheel for assisting the linear movement of the rack. The assisting force is an additional systems that may be a hydraulic system utilizing a hydraulic piston coupled to the rack or electrical system utilizing an electric motor to supply the assisting force to the rack. In either system there is a desire to properly support and allow for adjustments to the meshing engagement between the pinion and the rack during the operational life of the power steering apparatus.

The rack can be supported in the housing by a bearing to reduce the frictional resistance on the linear movement of the rack within the housing. The bearing also supports the rack and typically is adjustable to position the rack in proper meshing engagement with the pinion. The bearing, such as that disclosed in U.S. Pat. No. 6,247,375, utilizes a yoke with a bearing surface that is eccentric to the housing to support and adjust the rack into proper meshing engagement with the pinion. The yoke is installed into a housing of the power steering assembly. Once installed, the yoke is rotated thereby adjusting the support and positioning the rack in proper meshing engagement with the pinion. The yoke is then permanently staked into position with a tool to deform the housing to support and secure the yoke in the rotated position. Since the yoke is staked into position the yoke and bearing support is not adjustable after the complete installation of the yoke into the assembly. Therefore the yoke does not allow for adjustment of the rack after the completed assembly of a vehicle, and further provides no adjustment during the operation of the power steering assembly.

Additional bearing designs such as the bearing disclosed in U.S. Pat. No. 6,435,050, utilizes a two-piece bearing design with a complex assembly involved to support the rack in the housing. The rack bearing is complex with a multiple piece bearing surface and additional bushings are needed to support the rack in proper meshing engagement with the pinion.

EP 1 738 989 A1 discloses a power steering apparatus according to the preamble of claim 1. Further prior art is known from GB 655 130 A and from US 6 435 050 B1.

It is an objective of the present invention to provide an improved power steering apparatus.

### SUMMARY OF THE INVENTION

The objective is solved by a power steering apparatus according to claim 1. Preferred embodiments of the invention are mentioned in the dependent claims.

The subject invention provides a power steering apparatus. The power steering apparatus comprises a housing extending along a longitudinal axis. The housing includes a chamber having an inner surface. A rack is disposed within the chamber. The rack is moveable along the longitudinal axis. A pinion is supported by the housing. The pinion extends into the chamber for meshing engagement with the rack. A bearing engages the inner surface of the chamber. The bearing is disposed about the rack. The bearing includes a wall having a continuous varying radial thickness circumferentially surrounding the rack. An adjustment mechanism is supported by the housing. The adjustment mechanism is coupled to the bearing. The adjustment mechanism rotatably adjusts the bearing relative to the longitudinal axis to ensure tight meshing engagement between the pinion and the rack. A spring is supported by the housing and biases against the adjustment mechanism for automatically advancing the adjustment mechanism to continuously adjust the bearing.

Accordingly, the steering apparatus of the subject invention continuously and automatically adjusts the position of the rack relative to the pinion to provide for the proper meshing engagement between the rack and the pinion. The position of the rack relative to the pinion is adjusted by rotating the eccentric rack bearing about the longitudinal axis, thereby moving the rack into the proper meshing engagement. Thus, by maintaining the proper tight meshing engagement, the steering apparatus of the subject invention minimizes or eliminates undesirable vibration and noise caused by worn out gears having a loose and improper meshing engagement.

### BRIEF DESCRIPTION OF THE DRAWINGS

Other advantages of the present invention will be readily appreciated, as the same becomes better understood by reference to the following detailed description when considered in connection with the accompanying drawings wherein:

Figure 1 is a plan view of a housing for a power steering apparatus;

Figure 2 is a cross sectional view of the housing along cut line 2-2 shown in Figure 1;

Figure 3 is a partial cross sectional view showing a bearing and an adjustment mechanism in the housing; and

Figure 4 is a cross sectional view of the bearing.

### DESCRIPTION OF THE PREFERRED EMBODIMENTS

Referring to the Figures, wherein like numerals indicate corresponding parts throughout the several views, a power steering apparatus is shown generally at **20.**

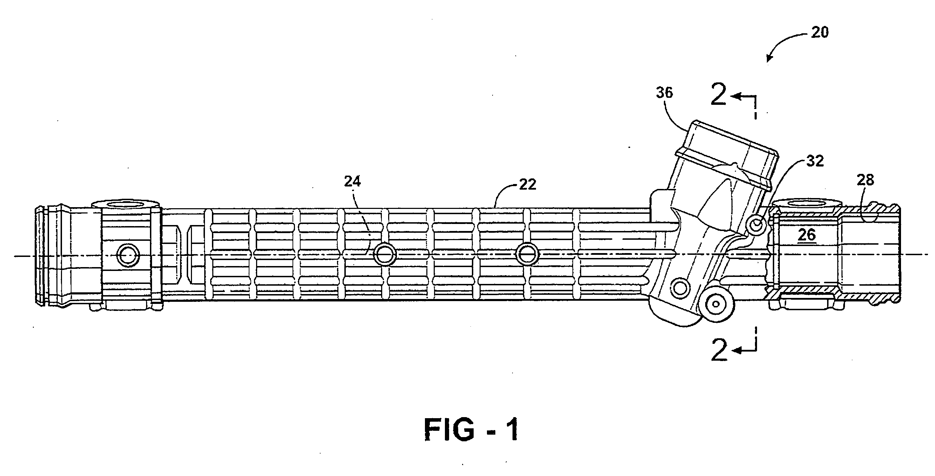

Referring to Figure 1, the power steering apparatus **20** includes a housing **22** extending along a longitudinal axis **24.** The housing **22** defines a chamber **26** that extends along the longitudinal axis **24** and includes an inner surface **28.** A rack **30** is disposed within the chamber **26** and is moveable along the longitudinal axis **24.** The housing **22** defines an aperture **32** having threads. The aperture **32** extends into the chamber **26** for receiving an adjustment mechanism **34** (discussed in greater detail below). The housing **22** further includes an adjoining extension **36** that is connected to the chamber **26** and extends to rotatably support a pinion (also discussed in greater detail below). The pinion extends into the chamber **26** for meshing engagement with the rack **30.** The adjoining extension **36,** and the pinion are disposed generally transverse to the longitudinal axis **24** and the chamber **26.**

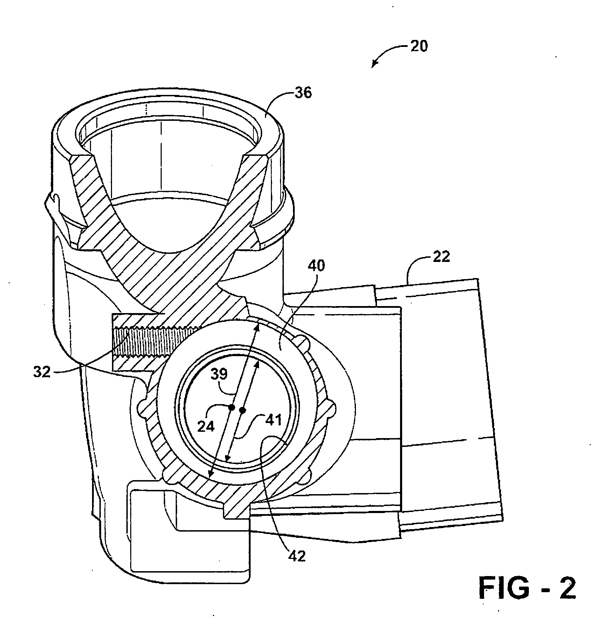

Referring to Figure 2, the inner surface **28** defines a first diameter **39** having a center on the longitudinal axis **24.** A bearing **40** defines a second diameter **41** having a center on a second axis. The first diameter **39** can be offset an amount which will vary depending on the design of the inner surface **28** and the bearing **40** to be supported within the inner surface **28.** However, as is known in the art the inner surface **28** of the housing **22** can have different diameters and configurations with varying offset distances between the longitudinal axis **24** and the second axis. It is also appreciated that there can be no offset, which will depend on the bearing **40** design, the rack **30** configuration, and the space and size constraints on the power steering apparatus **20** within the given application. It is also appreciated by one skilled in the art that the inner surface **28** of the housing **22** can be configured to various geometries for supporting and locating the bearing **40,** and the rack **30** within the housing **22,** as will be further discussed below.

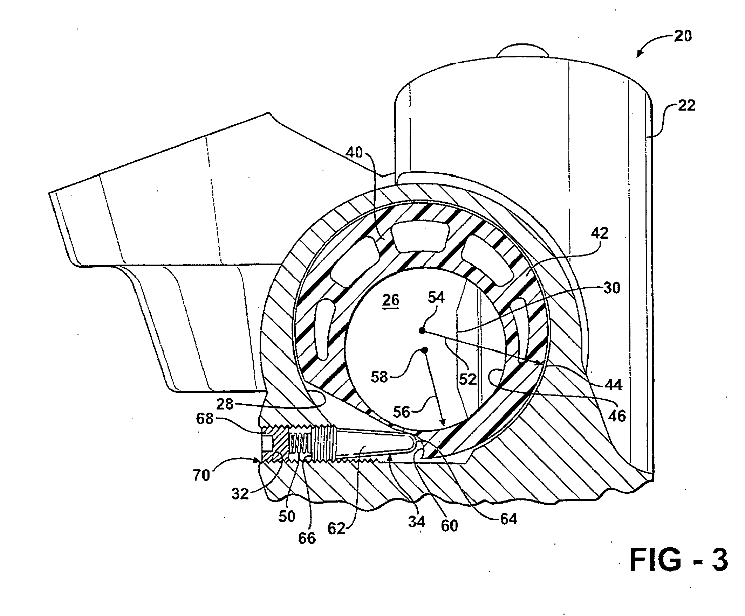

As described above and shown in Figure 3, the rack **30** is disposed within the chamber **26** of the housing **22** and moves linearly along the longitudinal axis **24.** The rack **30** moves in response to rotational movement of the pinion as is known in the art. The pinion is rotatably supported in the adjoining extension **36** of the housing **22.** The rack **30** defines a plurality of teeth for meshing with the pinion as is well known in the art. The rack **30** translates the rotational movement of the pinion to a linear movement. In a typical application, such as a passenger vehicle, the pinion is connected to the steering wheel (not shown) and rotates in relationship to a movement of the steering wheel by a driver. The rack **30** translates the rotational movement of the pinion into the linear movement which is connected to and moves the steerable wheels of a vehicle, typically through a tie rod engaging each of the steerable wheels. As known in the art, the power steering apparatus **20** typically includes an assisting force (not shown) to move the rack **30** within the housing **22.** The assisting force is commonly created by a mechanical system such as a hydraulic, an electric or various other assisting technologies as are known in the art.

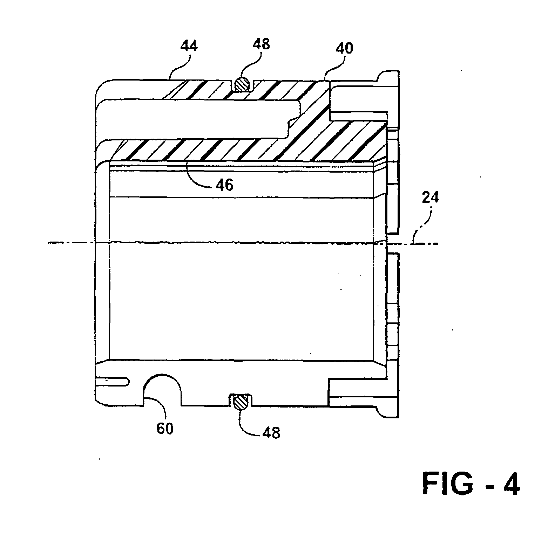

Referring to Figures 3 and 4, the rack **30** is supported in the housing **22** by a bearing **40,** with the bearing **40** engaging the inner surface **28** of the chamber **26** and disposed about the rack **30.** The bearing **40** of the subject invention includes a wall **42** having a continuous varying radial thickness circumferentially surrounding the rack **30** in the housing **22.** The wall **42** of the bearing **40** has an outer face **44** and an inner face **46.** A de-lashing device **48** interconnects the bearing **40** and the housing **22.** The de-lashing device **48** dampens the lash movements of the rack **30** within the bearing **40** against the inner surface **28** of the housing **22** and acts like a spring to resist rotational movement between the bearing **40** and said housing **22.** The de-lashing device **48** may include an elastomeric material and be configured in any suitable manner as one skilled in the art would recognize. The de-lashing device **48** may further be defined as an o-ring **48** that is compressed between the inner surface **28** of the chamber **26** and the outer face **44** of the bearing **40.** Preferably, the o-ring **48** is a polymeric material with elastic properties and thereby provides dampening of the lash movements of the rack **30** relative to the pinion and housing **22.** Preferably, the o-ring **48** is disposed within a channel defined by the outer face **44** of the bearing **40.**

As described above, the wall **42** of the bearing **40** includes the outer face **44** and inner face **46.** The outer face **44** is defined by an outer radius **52.** The outer face **44** is generally circular and defines an external circumference having a first center point **54.** The wall **42** is further defined by the inner face **46** having an inner radius **56.** The inner face **46** is generally circular and defines an internal circumference having a second center point **58.** The second center point **58** is spaced a distance from the first center point **54** to define an amount of eccentricity between the outer circumference and the inner circumference which thereby defines the varying radial thickness of the wall **42.** The varying radial thickness is gradual allowing for a gradual and smooth adjustment of the bearing **40** by the adjustment device, as discussed below.

The adjustment mechanism **34** is supported by the housing **22,** and is coupled to the bearing **40.** The adjustment mechanism **34** rotatably adjusts the bearing **40** relative to the longitudinal axis **24** to ensure tight meshing engagement between the pinion and the rack **30.** It should be appreciated that as the teeth on the pinion and the rack **30** wear down, the meshing engagement between the teeth on the pinion and the teeth on the rack **30** loosens, thereby causing undesirable vibration and noise. Accordingly, the adjustment mechanism **34** rotates the bearing **40** about the longitudinal axis **24,** and by way of the eccentric wall **42** thickness of the bearing **40,** re-positions the rack **30** relative to the pinion to maintain the proper tight meshing engagement between the teeth on the rack **30** and the teeth on the pinion

The wall **42** of the bearing **40** defines a seat **60.** The seat **60** is disposed near the outer face **44** of the wall **42.** The adjustment mechanism **34** engages the seat **60.** More specifically, the adjustment mechanism **34** includes a shaft **62,** with the shaft **62** including a first end **64** abutting the seat **60.** The first end **64** of the shaft **62** abuts the seat **60** in a generally tangential relationship relative to the bearing **40,** near an outer circumference of the bearing **40.** Accordingly, linear movement of the shaft **62** creates a torque in the bearing **40** about the longitudinal axis **24.** The torque in the bearing **40** rotates the bearing **40** about the longitudinal axis **24.**

As best shown in Figure 3, a spring **50** is supported by the housing **22** within the aperture **32.** The spring **50** biases against the adjustment device for automatically advancing the adjustment device, and thereby continuously adjusting the bearing **40** as the teeth on the rack **30** and the teeth on the pinion continuously wear from repeated use. Preferably, the spring **50** includes a coil spring **50.** However, it should be appreciated that the spring **50** may include some other device not shown or described herein that is capable of biasing the shaft **62** linearly outward from the aperture **32.**

As described above, the aperture **32** includes threads. The shaft **62** includes a second end **66** having threads. The second end **66** of the shaft **62** is in threaded engagement with the threads on the aperture **32.** The threaded engagement between the shaft **62** and the aperture **32** provides for rotational movement of the shaft **62** relative to the housing **22,** which translates into linear movement of the shaft **62** along an axis of the aperture **32** relative to the housing **22.**

A plug **68** is disposed within the aperture **32** and fixedly attached to the housing **22.** Preferably, the plug **68** is in threaded engagement with the aperture **32,** and includes a setscrew. However, it should be appreciated that the plug **68** may include some other device affixed to the housing **22** within the aperture **32** to seal the aperture **32** and provide a surface for the spring **50** to bias against. Preferably, a locking mechanism **70** fixedly secures the plug **68** within the aperture **32** to prevent rotation of the plug **68** relative to the housing **22.** The locking mechanism **70** may include a staking device, a jam nut, a thread adhesive, or some other suitable device. During assembly of the power steering apparatus **20,** the plug **68** is threaded into the aperture **32** to a desired position, which corresponds to a desired initial position of the rack **30** and the bearing **40.** After the plug **68** is properly positioned within the aperture **32,** the locking device is positioned, applied or attached to securely fix the position of the plug **68** relative to the housing **22.**

The spring **50** is disposed between the plug **68** and the second end **66** of the shaft **62.** Accordingly, the spring **50** biases against the plug **68** to urge the shaft **62** into rotational movement to thereby produce linear movement of the shaft **62.**

In operation, rotational movement of the bearing **40** relative to the housing **22** is resisted by the de-lashing device **48.** The spring **50,** disposed between the shaft **62** and the plug **68,** biases the shaft **62** toward the bearing **40.** As the meshing engagement between the rack **30** and the pinion loosens, rotational movement of the bearing **40** relative to the housing **22** becomes possible. When a biasing force from the spring **50** becomes greater than a resisting force produced by the de-lashing device **48,** the spring **50** causes the shaft **62** to rotate, thereby linearly moving the shaft **62** within the aperture **32** toward the bearing **40.** This linear movement of the shaft **62** rotates the bearing **40.** Because of the eccentricity of the bearing **40,** as the bearing **40** rotates, the rack **30** is brought back into tight meshing engagement with the pinion Thus, a force imbalance between the biasing force of the spring **50** and the resisting force of the de-lashing device **48** act on the shaft **62** to cause the shaft **62** to translate axially along the axis of the aperture **32.** The biasing force and the resisting force tend to remain in balance until the rack **30** and the pinion wear down, at which time the biasing force of the spring **50** becomes greater than the resisting force of the de-lashing device **48.** The threaded connection between the shaft **62** and the aperture **32** prevents backward movement of the shaft **62** toward the plug **68** in the event of a high impact load.

## Claims

1. A power steering apparatus **(20)** comprising:
a housing **(22)** extending along a longitudinal axis **(24)** and having a chamber **(26)** with an inner surface **(28);**
a rack **(30)** disposed within said chamber **(26)** for movement along said longitudinal axis **(24)**;
a pinion supported by said housing **(22)** and extending into said chamber **(26)** for meshing engagement with said rack **(30);**
a bearing **(40)** engaging said inner surface **(28)** of said chamber **(26)** and disposed about said rack **(30)** with said bearing **(40)** having a wall **(42)** of a continuous varying radial thickness circumferentially surrounding said rack **(30);**
an adjustment mechanism **(34)** supported by said housing **(22)** and coupled to said bearing **(40)** for rotatably adjusting said bearing **(40)** relative to said longitudinal axis **(24)** to ensure tight meshing engagement between said pinion and said rack **(30);**
a spring **(50)** supported by said housing **(22)** and biasing against said adjustment mechanism **(34)** for automatically advancing said adjustment mechanism **(34)** to continuously adjust said bearing **(40)**,
wherein said housing **(22)** defines an aperture **(32)** having threads and said adjustment mechanism **(34)** includes a shaft **(62)** having a second end **(66)** in threaded engagement with said aperture **(32)** for rotational movement of said shaft **(62)** relative to said housing **(22)**,
wherein a plug **(68)** is disposed within said aperture **(32)** and fixedly attached to said housing **(22)**,
**characterized in that**
said spring **(50)** is disposed within said aperture **(32)** between said plug **(68)** and said second end **(66)** of said shaft **(62).**

2. An apparatus **(20)** as set forth in claim 1 further comprising a locking mechanism **(70)** fixedly securing said plug **(68)** within said aperture **(32)** to prevent rotation of said plug **(68)** relative to said housing **(22).**

3. An apparatus **(20)** as set forth in claim 1 or 2 wherein said wall **(42)** of said bearing **(40)** defines a seat **(60)** and with said adjustment mechanism **(34)** engaging said seat **(60).**

4. An apparatus **(20)** as set forth in claim 3 wherein said shaft **(62)** includes a first end **(64)** abutting said seat **(60)** in a generally tangential relationship to said bearing **(40).**

5. An apparatus **(20)** as set forth in at least one of the preceding claims further comprising a de-lashing device **(48)** interconnecting said bearing **(40)** and said housing **(22).**

6. An apparatus **(20)** as set forth in claim 5 wherein said de-lashing device **(48)** includes an o-ring **(48)** compressed between said bearing **(40)** and said housing **(22).**

7. An apparatus **(20)** as set forth in claim 6 wherein said o-ring **(48)** includes an elastomeric material.

## Patentansprüche

1. Servolenkvorrichtung (20), umfassend:
ein Gehäuse (22), das sich entlang einer Längsachse (24) erstreckt und eine Kammer (26) mit einer Innenfläche (28) aufweist;
eine Zahnstange (30), die in der Kammer (26) zur Bewegung entlang der Längsachse (24) angeordnet ist;
ein Ritzel, das von dem Gehäuse (22) gelagert ist und sich in die Kammer (26) zum kämmenden Eingriff mit der Zahnstange (30) erstreckt;
ein Lager (40), das mit der Innenfläche (28) der Kammer (26) in Eingriff steht und um die Zahnstange (30) angeordnet ist, wobei das Lager (40) eine Wand (42) mit einer kontinuierlich variierenden radialen Dicke aufweist, die die Zahnstange (30) um den Umfang herum umgibt;
einen Einstellmechanismus (34), der von dem Gehäuse (22) gelagert und mit dem Lager (40) zur drehbaren Einstellung des Lagers (40) relativ zu der Längsachse (24) gekoppelt ist, um einen engen kämmenden Eingriff zwischen dem Ritzel und der Zahnstange (30) sicherzustellen;
eine Feder (50), die von dem Gehäuse (22) gelagert ist und gegen den Einstellmechanismus (34) zum automatischen Vorschub des Einstellmechanismus (34) vorspannt, um das Lager (40) kontinuierlich einzustellen,
wobei das Gehäuse (22) eine Durchbrechung (32) definiert, die ein Gewinde aufweist, und der Einstellmechanismus (34) einen Schaft (62) aufweist, der ein zweites Ende (66) in Gewindeeingriff mit der Durchbrechung (32) zur Drehbewegung des Schaftes (62) relativ zu dem Gehäuse (22) aufweist,
wobei in der Durchbrechung (32) ein Stopfen (68) angeordnet ist, der fest an dem Gehäuse (22) angebracht ist,
**dadurch gekennzeichnet, dass**
die Feder (50) in der Durchbrechung (32) zwischen dem Stopfen (68) und dem zweiten Ende (66) des Schaftes (62) angeordnet ist.

2. Vorrichtung (20) nach Anspruch 1,
ferner mit einem Verriegelungsmechanismus (70), der den Stopfen (68) fest in der Durchbrechung (32) sichert, um eine Drehung des Stopfens (68) relativ zu dem Gehäuse (22) zu verhindern.

3. Vorrichtung (20) nach einem der Ansprüche 1 oder 2,
wobei die Wand (42) des Lagers (40) einen Sitz (60) definiert und wobei der Einstellmechanismus (34) mit dem Sitz (60) in Eingriff steht.

4. Vorrichtung (20) nach Anspruch 3,
wobei der Schaft (62) ein erstes Ende (64) aufweist, das an dem Sitz (60) in einer allgemein tangentialen Beziehung zu dem Lager (40) anliegt.

5. Vorrichtung (20) nach zumindest einem der vorhergehenden Ansprüche,
ferner mit einer Spielbeseitigungsvorrichtung (48), die das Lager (40) und das Gehäuse (22) verbindet.

6. Vorrichtung (20) nach Anspruch 5,
wobei die Spielbeseitigungsvorrichtung (48) einen O-Ring (48) aufweist, der zwischen dem Lager (40) und dem Gehäuse (22) komprimiert ist.

7. Vorrichtung (20) nach Anspruch 6,
wobei der O-Ring (48) ein elastomeres Material aufweist.

## Revendications

1. Appareil de direction assistée (20) comprenant :
un boîtier (22) s'étendant le long d'un axe longitudinal (24) et ayant une chambre (26) avec une surface intérieure (28) ;
une crémaillère (30) disposée à l'intérieur de ladite chambre (26) pour un mouvement le long dudit axe longitudinal (24) ;
un pignon supporté par ledit boîtier (22) et s'étendant jusque dans ladite chambre (26) pour venir en engagement d'engrènement avec ladite crémaillère (30) ;
un palier (40) en engagement avec ladite surface intérieure (28) de ladite chambre (26) et disposé autour de ladite crémaillère (30), ledit palier (40) ayant une paroi (42) d'une épaisseur radiale qui varie en continu, qui entoure circonférentiellement ladite crémaillère (30) ;
un mécanisme d'ajustement (34) supporté par ledit boîtier (22) et couplé audit palier (40) pour ajuster en rotation ledit palier (40) par rapport audit axe longitudinal (24) pour assurer un engagement d'engrènement intime entre ledit pignon et ladite crémaillère (30) ;
un ressort (50) supporté par ledit boîtier (22) et poussant contre ledit mécanisme d'ajustement (34) pour faire automatiquement avancer ledit mécanisme d'ajustement (34) pour ajuster continuellement ledit palier (40),
dans lequel ledit boîtier (22) définit une ouverture (32) ayant un taraudage et ledit mécanisme d'ajustement (34) inclut une tige (62) ayant une seconde extrémité (66) en engagement vissé avec ladite ouverture (32) pour un mouvement de rotation de ladite tige (62) par rapport audit boîtier (22),
dans lequel un bouchon (68) est disposé dans ladite ouverture (32) et attaché de manière fixe audit boîtier (22),
**caractérisé en ce que**
ledit ressort (50) est disposé dans ladite ouverture (32) entre ledit bouchon (68) et ladite seconde extrémité (66) de ladite tige (62).

2. Appareil (20) selon la revendication 1, comprenant en outre un mécanisme de blocage (70) qui attache de façon fixe ledit bouchon (68) dans ladite ouverture (32) pour empêcher une rotation dudit bouchon (68) par rapport audit boîtier (22).

3. Appareil (20) selon la revendication 1 ou 2, dans lequel ladite paroi (42) dudit palier (40) définit un siège (60), et dans lequel ledit mécanisme d'ajustement (34) engage ledit siège (60).

4. Appareil (20) selon la revendication 3, dans lequel ladite tige (62) inclut une première extrémité (64) en butée contre ledit siège (60) dans une relation généralement tangentielle par rapport audit palier (40).

5. Appareil (20) selon l'une au moins des revendications précédentes, comprenant en outre un dispositif de rattrapage de jeu (48) qui relie ledit palier (40) et ledit boîtier (22).

6. Appareil (20) selon la revendication 5, dans lequel ledit dispositif de rattrapage de jeu (48) inclut un joint torique (48) comprimé entre ledit palier (40) et ledit boîtier (22).

7. Appareil (20) selon la revendication 6, dans lequel ledit joint torique (48) inclut un matériau élastomère.
